# EUROPÄISCHE PATENTSCHRIFT

(11) **EP 0 943 485 B1**
(45) Veröffentlichungstag und Bekanntmachung des Hinweises auf die Patenterteilung: **08.03.2006**
(21) Anmeldenummer: 99250075.1
(22) Anmeldetag: 12.03.1999
(51) Int. Cl.: B60N 2/20, B60N 3/00, B60N 2/02

(54) **Kraftfahrzeugsitz mit klappbarer Rückenlehne**
Vehicle seat with tiltable backrest
Siège de véhicule à dossier rabattable

(30) Priorität: 20.03.1998 DE 19812140
(43) Veröffentlichungstag der Anmeldung: 22.09.1999
(73) Patentinhaber: Faurecia Autositze GmbH & Co. KG, 31655 Stadthagen (DE); Dr.Ing. h.c. F. Porsche Aktiengesellschaft, 71287 Weissach (DE)
(72) Erfinder: Hagemann, Rainer, 21398 Neetze (DE); Adamski, Pawel, 71069 Sindelfingen (DE); Plate, Horst, 71735 Eberdingen (DE); Zarske, Rocco, 10437 Berlin (DE)
(74) Vertreter: Seewald, Jürgen

(56) Entgegenhaltungen:
- EP-A- 0 492 281
- EP-A- 0 943 483
- US-A- 5 722 703
- PATENT ABSTRACTS OF JAPAN vol. 018, no. 072 (M-1555), 7. Februar 1994 (1994-02-07) -& JP 05 286384 A (MAZDA MOTOR CORP), 2. November 1993 (1993-11-02)

## Beschreibung

Die vorliegende Erfindung betrifft einen Kraftfahrzeugsitz gemäß dem Oberbegriff des Anspruchs 1. Ein derartiger sitz ist z.B. aus der EP 0 492 281 A bekannt.

Insbesondere bei Vans und Kleintransportern zur Personenbeförderung geht der Trend dahin, die Sitze oder Teile davon multifunktionell zu nutzen. So ist es beispielsweise bekannt, einen Sitz oder eine Sitzgruppe in eine Schlaffläche zu verwandeln, und in JP 6-191 338 A wird eine Armlehne als Tisch bzw. ein Tisch als Armlehne genutzt. Aus DE 16 97 773 U ist eine Einrichtung zur Unterbringung von Schreibmaschinen an Kraftfahrzeugsitzen bekannt. Diese Einrichtung besteht aus einer Tischplatte, die aus der Rückseite der stehenden Rückenlehne herausklappbar ist und Haltemittel für die Schreibmaschine aufweist. In der Rückenlehne ist ein ausgekleideter Hohlraum zur platzsparenden Aufbewahrung der Schreibmaschine vorgesehen, wenn diese nicht gebraucht wird.

Aufgabe der vorliegenden Erfindung ist es, für einen Kraftfahrzeugsitz mit im wesentlichen waagerecht klappbarer Rückenlehne eine weitere Nutzungsmöglichkeit zur Verfügung zu stellen.

Gelöst wird diese Aufgabe bei einem derartigen Sitz dadurch, daß bei in Klapplage befindlicher Rückenlehne aus deren Rückseite eine Tischplatte in eine erhöhte Position herausfahr- oder herausklappbar ist.

Eine derartige Ausbildung ist insbesondere sinnvoll bei einem Mittelsitz einer Dreier-Sitzgruppe, da dann der Tisch von beiden Außensitzen nutzbar ist. Besonders vorteilhaft ist es dabei, wenn möglichst die gesamte Rückseite der Rückenlehne als Tischplatte genutzt wird, weil dann eine komfortabel große Tischfläche zur Verfügung steht.

Weitere vorteilhafte Ausgestaltungen der vorliegenden Erfindung ergeben sich aus den Unteransprüchen.

Die Erfindung wird nachstehend anhand eines Ausführungsbeispiels näher erläutert. In der dazugehörigen Zeichnung zeigt:
- Fig. 1: einen perspektivischen Blick von schräg hinten und oben auf die Tragkonstruktion eines Kraftfahrzeugsitzes,
- fig. 2: einen Ausschnitt A gemäß Fig. 1 in vergrößertem Maßstab,
- Fig. 3: eine Seitenansicht des Kraftfahrzeugsitzes bei vollständig geklappter Rückenlehne,
- Fig. 4: einen perspektivischen Blick auf die Darstellung gemäß Fig. 3 von schrag vorn und oben,
- Fig. 5: eine perspektivische Darstellung des Kraftfahrzeugsitzes mit in Gebrauchslage herausgeklappter Tischplatte, und
- Fig. 6: einen Ausschnitt B gemäß Fig. 5 in vergrößertem Maßstab.

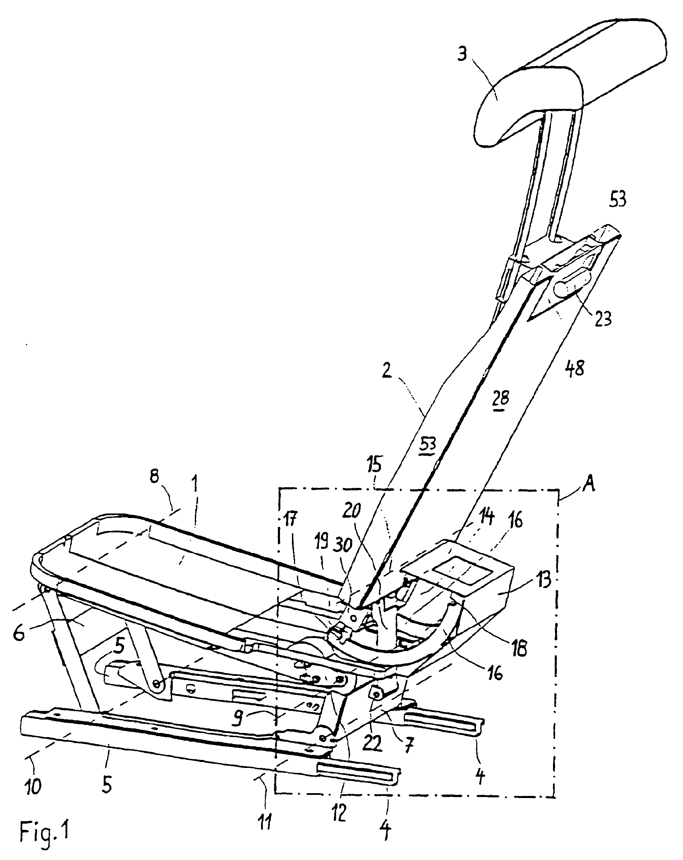

Der in Fig. 1 dargestellte Kraftfahrzeugsitz mit einem Sitzteil 1 und einer Rückenlehne 2 und einer an letzterer gelagerten Kopfstütze 3, ist längsverschiebbar auf dem nicht dargestellten Fahrzeugboden angeordnet. Dazu ist, wie üblich, ein System aus zwei parallelen Unter- 4 und Oberschienen 5 vorgesehen.

Der Kraftfahrzeugsitz ist auf einem Fußgestell, bestehend aus einer vorderen Schwinge 6 und einer hinteren Schwinge 7, abgestützt, wobei die Schwingen 6, 7 eine obere Drehachse 8 bzw. 9 mit dem Sitzteil 1 und eine untere Drehachse 10 bzw. 11 mit den Oberschienen 5 besitzen. Die Schwingen 6, 7 bilden zusammen mit dem Sitzteil 1 und den Oberschienen 5 ein sogenanntes Sitzparallelogramm. Dieses Sitzparallelogramm ist verriegelbar, wozu beidseitig zwischen der hinteren Schwinge 7 und dem Sitzteil 1 je eine Verriegelungsklinke vorgesehen ist. Die Verriegelungsklinken sind hinter Abdeckungen 12 angeordnet und daher aus der zeichnerischen Darstellung nicht ersichtlich. In der verriegelten Stellung bildet das Sitzparallelogramm somit eine starre Konstruktion.

Vom hinteren Ende des Sitzteils 1 ragt ein Kragarm 13 in Form eines geschlossenen Kastens nach oben ab, dessen dem Betrachter zugewandte Seitenwand 14 in den Fig. 1, 2 und 3 zur Veranschaulichung der Kopplung und Verrastung zwischen Rückenlehne 2 und Sitzteil 1 weggelassen worden ist. In den beiden Seitenwänden 14 des Kragarms 13 ist die Klappachse 15 der Rükkenlehne 1 gelagert.

Parallel zu den Seitenwänden 14 sind im Kragarm 13 beidseitig Segmentbleche 16 vorgesehen, die einen Rastausschnitt 17 für die Sitzlage der Rückenlehne 2 und einen Rastausschnitt 18 für die Klapplage der Rückenlehne 2 aufweisen. In den arretierten Stellungen greifen beidseitig in der Rückenlehne 2 geführte Rastnasen 19 in die Rastausschnitte 17 bzw. 18 ein. Die Segmentbleche 16 liegen auf einem Kreisbogen um die Klappachse 15 der Rückenlehne 2.

Zwischen der Rückenlehne 2 und der hinteren Schwinge 7 des Sitzparallelogramms ist ein starres Koppelelement 20 angeordnet, welches über eine Drehachse 21 an die Rückenlehne 2 und über eine Drehachse 22 an die hintere Schwinge 7 angeschlagen ist. Dabei ist die Drehachse 21 unterhalb der Klappachse 15 der Rückenlehne 2 und die Drehachse 22 zwischen den Drehachsen 11 und 9 der Schwinge 7 angeordnet. Die Drehachsen 21 und 22 des Koppelelements 20 sind in starr mit der Rückenlehne 2 bzw. mit der Schwinge 7 verbundenen Laschen 26 bzw. 27 gelagert.

Die Umwandlung des oben insoweit statisch beschriebenen Kraftfahrzeugsitzes in eine zusätzliche Ladefläche wird nachstehend näher erläutert. Ausgangsposition ist die in Fig. 1 dargestellte Sitzlage des Kraftfahrzeugsitzes.

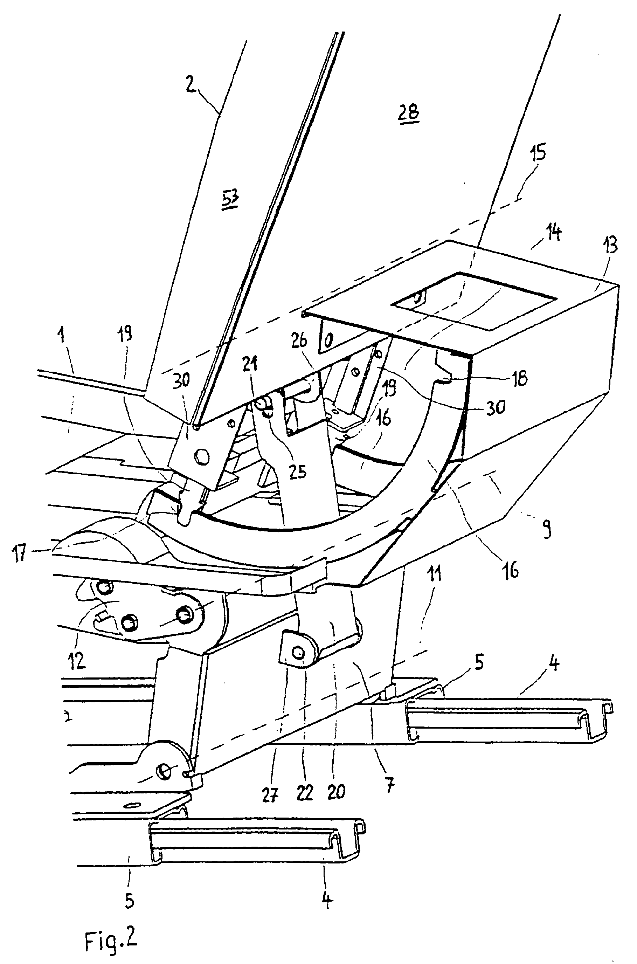

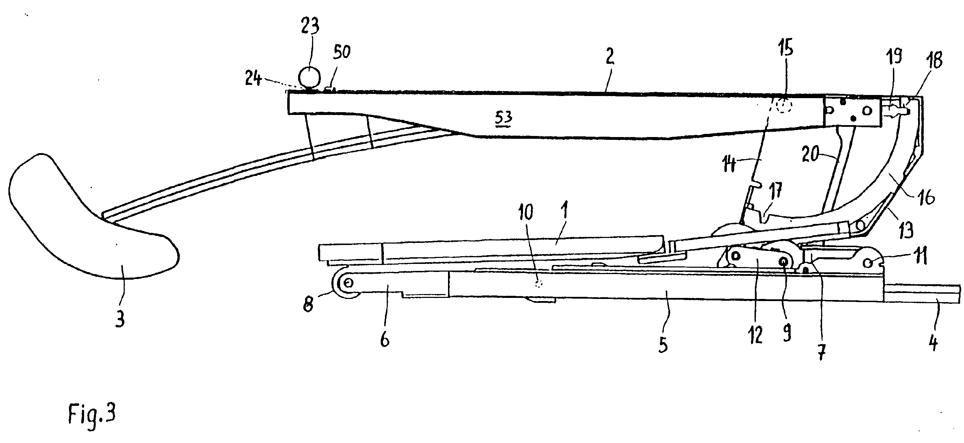

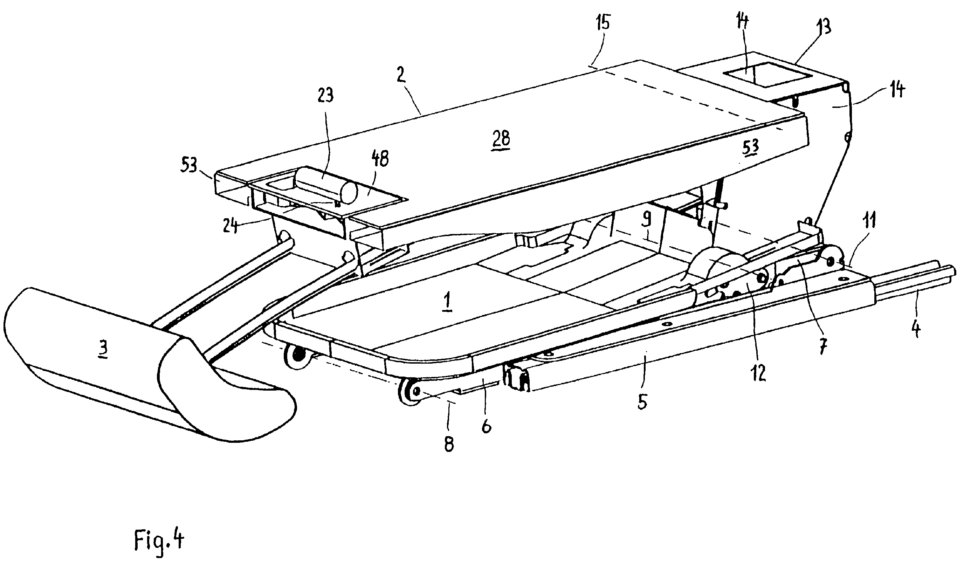

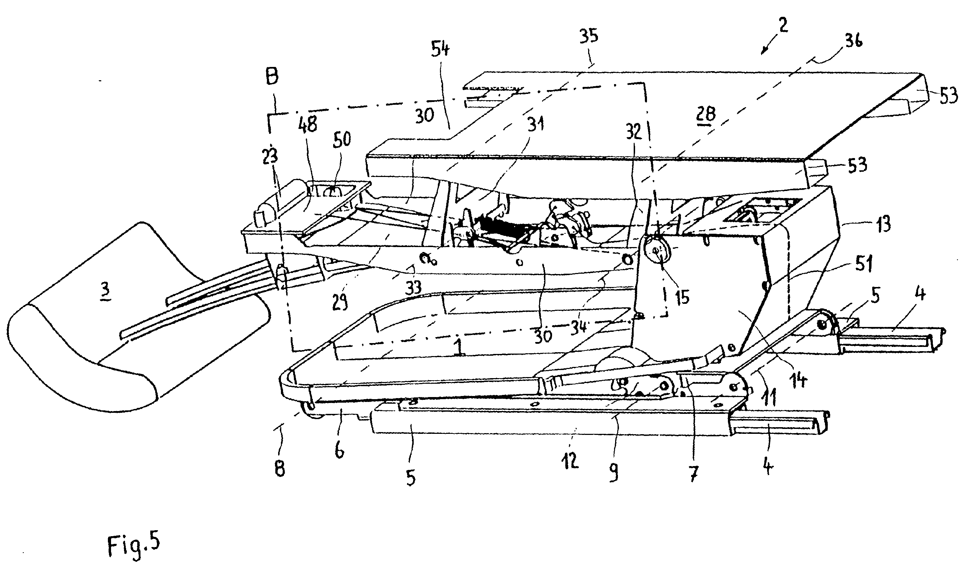

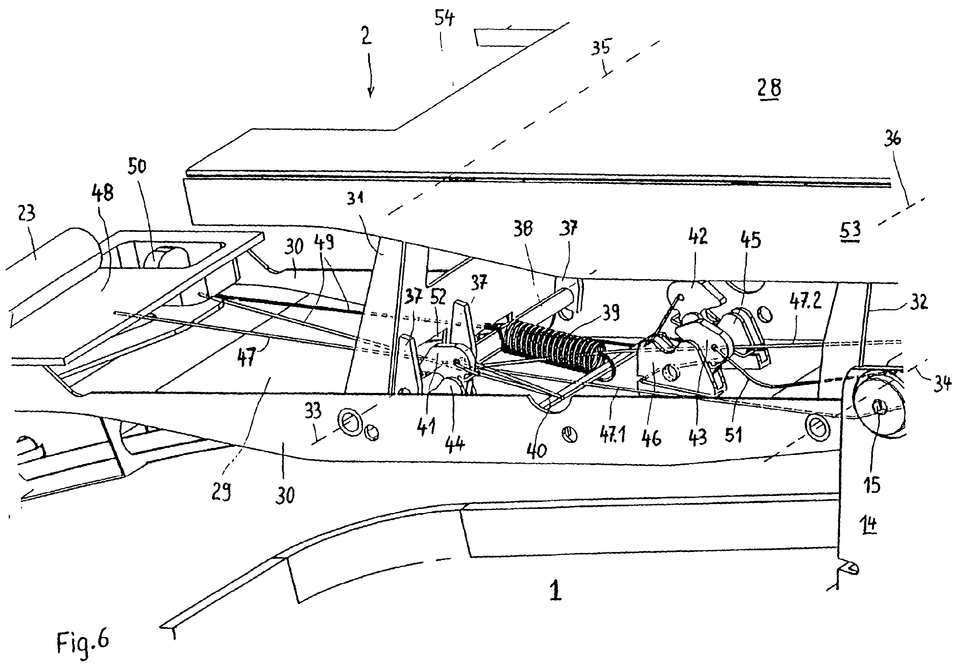

Um die Rückenlehne 2 klappen zu können, muß ihre Verriegelung mit dem Sitzteil 1 aufgehoben werden. Das geschieht durch Betätigung eines Handgriffs 23, der oben auf der Rückseite der Rückenlehne 2 an einem Bedienungskasten 48 schwenkbar angeordnet ist. Der Bedienungskasten 48 sitzt in einer Aussparung 54 der Rückseite der Rückenlehne 2 und ist am oberen Ende eines tragenden Mittelteils 29 (Fig. 5 und 6) der Rückenlehne 2, welches weiter unten noch näher erläutert wird, angeordnet. Der Handgriff 23 ist über einen Seilzug 47, der sich in seinem Verlauf in zur linken bzw. rechten Sitzseite führende Zweige 47.1 bzw. 47.2 gabelt, sowohl mit den Rastnasen 19 als auch mit den hinter den Abdeckungen 12 angeordneten Verriegelungsklinken des Sitzparallelogramms verbunden. Durch Schwenken des Handgriffs 23 entgegen Uhrzeigerrichtung, in den Fig. 3 und 4 ist die Schwenkachse 24 des Handgriffs 23 ersichtlich, wird der Seilzug 47 gezogen, d.h. die Arretierungen zwischen der Rückenlehne 2 und dem Sitzteil 1 und des Sitzparallelogramms werden gleichzeitig aufgehoben. Die Rückenlehne 2 kann nun nach vorn geklappt werden. Dabei beschreibt die obere Drehachse 21 des Kopplungselements 20 einen Kreisbogen um die Klappachse 15 der Rückenlehne 2. Da die Rückenlehne 2 in Sitzlage schräg nach hinten geneigt ist, bewegt sich die Drehachse 21 zunächst auf diesem Kreisbogen etwas nach unten. Um diese Abwärtsbewegung zu kompensieren, sind im Koppelelement 20 Langlöcher 25 (Fig. 2) vorgesehen, in denen die Drehachse 21 gelagert ist. Diese bewegt sich also in den Langlöchern 25 zu Beginn des Klappvorgangs kurzzeitig nach unten, um dann wieder nach oben zu gehen und an die obere Wandung der Langlöcher 25 anzuschlagen. Durch das Klappen der Rückenlehne 2 wird auf das starre Koppelelement 20 Zug ausgeübt. Dieser Zug resultiert darin, daß die hintere Schwinge 7 des Sitzparallelogramms in Gegen-Uhrzeigerrichtung um ihre Drehachse 11 verschwenkt wird, d.h. das Sitzteil 1, und mithin der gesamte Fahrzeugsitz wird, gesteuert durch das Lennenklappen, abgesenkt. Am Ende des Klappvorganges ist die Rückenlehne 2 im wesentlichen parallel zum Fahrzeugboden ausgerichtet und das Sitzteil 1 liegt flach auf dem Fahrzeugboden. Diese Paketbildung geht gut aus den Fig. 3 und 4 hervor. In dieser Klapplage kann die Rückseite der Rückenlehne 2 als zusätzlicher Ladefläche, z.B. im Anschluß an einen Kofferraum, genutzt werden.

Beim Erreichen der in den Fig. 3 und 4 dargestellten Klapplage rasten die Rastnasen 19 der Rückenlehnen-Verriegelung in die Rastausschnitte 18 der Segmentbleche 16 ein, so daß diese Klapplage arretiert ist. Soll die Sitzlage wiederhergestellt werden, ist zunächst der Handgriff 23 zu betätigen, um die Rastnasen 19 außer Eingriff mit den Rastausschnitten 18 zu bringen. Die Rückenlehne 2 kann nun zurückgeklappt werden, wodurch das Sitzteil 1 über das Koppelelement 20 automatisch in seine Sitzlage gezogen wird. Die Rückenlehne 2 bildet dabei einen genügend langen Hebel, so daß dieser Vorgang mit keiner großen Kraftanstrengung verbunden ist.

Aus der in den Fig. 3 und 4 dargestellten Klapplage, in der die Rückseite der Rückenlehne 2, wie schon erwähnt, als zusätzliche Ladefläche nutzbar ist, kann der Kraftfahrzeugsitz zu einem Tisch umfunktioniert werden. Dabei dient die gesamte Rückseite der Rückenlehne 2 als Tischplatte 28, deren Längsseiten 53 als U-fÖrmig nach innen abgewinkelte Kastenprofile ausgebildet sind. Die Tischplatte 28 ist an dem weiter oben schon angesprochenen tragenden Mittelteil 29 der Rückenlehne 2 gelagert, dessen Ausbildung aus den Fig. 5 und 6 hervorgeht. Anhand dieser Darstellungen ist zu erkennen, daß das Mittelteil 29 die Form einer zur Tischplatte 28 hin offenen Wanne mit schmalen, rechtwinklig vom Boden abstehenden Seitenwangen 30 besitzt. In der Nähe ihrer unteren Enden nehmen die Seitenwangen 30 die Klappachse 15 der Rückenlehne 2 auf. Die Klappachse 15 durchsetzt also beidseitig die innenliegenden Seitenwangen 30 und die außenliegenden Seitenwände 14 des Kragarms 13, wodurch ein Klappgelenk für die Rückenlehne 2 gebildet ist.

An den Innenseiten der Seitenwangen 30 des Mittelteils 29 sind eine vordere Tischschwinge 31 und eine hintere Tischschwinge 32 drehgelenkig gelagert, wodurch Drehachsen 33 bzw. 34 gebildet sind. Diese Tischschwingen 31, 32 besitzen weiterhin an ihren oberen Enden Drehachsen 35 bzw. 36 mit der Tischplatte 28. Die Tischplatte 28, das Mittelteil 29 sowie die Tischschwingen 31, 32 bilden somit ein Tisch-Parallelogramm.

Die Tischschwingen 31, 32, und mit ihnen die Tischplatte 28, sind aus der in den Fig. 3 und 4 dargestellten Klapplaae in eine Tischfunktion gemäß den Fig. 5 und 6 schwenkbar. In dieser Lage ragen die Tischschwingen 31, 32 nach oben etwas schräg nach hinten, wodurch die Tischplatte 28 in einer nutzerfreundlichen Höhe angeordnet ist, während die Tischschwingen 31, 32 bei in Klapplage befindlicher Rückenlehne 2 vollständig vom wannenförmigen Mittelteil 29 aufgenommen werden. Die Klapp- bzw. Schwenkbewegung der Tischschwingen 31, 32 in die Tischfunktion wird durch eine Klinke 41 begrenzt, deren Funktion weiter unten noch näher erläutert wird.

An die vordere Tischschwinge 31 ist oberhalb ihrer unteren Schwenkachse 33 über drei Stegbleche 37 ein Querrohr 38 angeschweißt, in welches ein Ende einer Zugfeder 39 eingehängt ist. Das andere Ende dieser Zugfeder 39 ist mit einer im Abstand vom Querrohr 38 angeordneten Querstrebe 40 verbunden, deren Enden mit den Seitenwangen 30 des Mittelteils 29 verschweißt sind. Durch die Wirkung der Zugfeder 39 ist das Tisch-Parallelogramm in seine Gebrauchslage vorgespannt.

Die Tischplatte 28 ist sowohl bei in Sitzlage und in Klapplage befindlicher Rückenlehne 2 als auch in ihrer Gebrauchslage zwangsverriegelt. Dazu sind drei in Schließlage vorgespannte Klinken 41, 42 und 43 vorgesehen, die in starr mit dem Boden des Mittelteils 29 verbundenen Lagerböcken 44, 95 bzw. 46 schwenkbar gehaltert sind. Die Klinken 41 und 42 sind über einen Seilzug 49 mit einem im Bedienungskasten 48 neben dem schon oben erwähnten Handgriff 23 angeordneten Schiebegriff 50 verbunden, während in die Klinke 43 ein durch das Lehnenklappen aktivierbarer Seilzug 51 eingehängt ist. Die Verbindung des Zugseils 49 mit dem Schiebegriff 50 erfolge mittels einer Schleife, während die beiden Enden des Zugseils 49 in die Klinken 41 bzw. 42 eingehängt sind. Das zur Klinke 41 führende Ende des Zugseils 49 wird an der Querstrebe 40 umgelenkt, so daß die Klinken 41 und 42 bei Betätigung des Schiebegriffs 50 in entgegengesetzte Richtungen öffnen. Die Umlenkung des Zugseils 49 an der Querstrebe 40 ist als schematische Darstellung aufzufassen. Zur Vermeidung von Reibungsverlusten kann diese Umlenkung in der Praxis zum Beispiel über eine feste Rolle erfolgen.

Nachfolgend wird die Überführung des Kraftfahrzeugsitzes in seine Tischfunktion näher erläutert. Ausgangssituation ist wiederum die in Fig. 1 dargestellte Sitzlage des Kraftfahrzeugsitzes. In dieser Lage sind die drei Klinken 41, 42 und 43 in an der Unterseite der Tischplatte 28 angeordnete, aus der Zeichnung nicht ersichtliche Rastbolzen eingerastet. Da die Klinken 41 und 42 bei in Sitzlage befindlicher Rückenlehne durch Betätigung (nach oben schieben) des Schiebegriffs 50 unbeabsichtigt gelöst werden könnten, steht, wie oben schon erwähnt, die Klinke 43 nicht in Wirkverbindung mit dem Schiebegriff 50. Diese Klinke 43 ist nur durch das Nachvornklappen der Rückenlehne 2 lösbar, wozu das mit dieser Klinke 43 verbundene Zugseil 51 in entsprechender Weise in das kinematische System des Lehnenklappvorganges eingebunden ist. Diese Ausbildung ist nicht dargestellt, da eine derartige Konstruktion einem Fachmann geläufig ist. Sie gewährleistet, daß die Tischfunktion des Kraftfahrzeugsitzes nur bei vollständig geklappter Rückenlehne 2 aktivierbar ist, weil erst dann die Klinke 43 vollständig geöffnet hat. Nach dem Überführen des Kraftfahrzeugsitzes in die Klapplage ist dann nur noch der Schiebegriff 50 in Richtung der Rückenlehnen-Oberkante zu schieben, wodurch die Klinken 41 und 42 öffnen und die Tischplatte 28, eventuell unter manueller Unterstützung, durch die Wirkung der Zugfeder 39 in ihre Gebrauchslage schwenkt. Diese Schwenkbewegung ist, wie weiter oben schon erwahnt, durch die Klinke 41 begrenzt. Deren Nase läuft beim Erreichen der Anschlaglage auf das Querrohr 38 auf, wodurch die Klinke 41 kurz nach hingen schwenkt, um dann hinter dem Querrohr 38 einzurasten. Damit ist die Gebrauchslage der Tischplatte 28 gesichert. In dieser Position durchgreift die Nase der Klinke 41 ein Fenster 52 der Tischschwinge 31.

Zum Überführen der Tischplatte 28 zurück in die Klapplage ist der Schiebegriff 50 zu betätigen, wodurch die Klinke 41 gelöst wird, und anschließend die Tischplatte 28 gegen die Kraft der Zugfeder 39 nach vorn und unten zu drücken, bis die Klinken 41 und 42 in die Rastbolzen an der Unterseite der Tischplatte 28 einrasten. Durch das anschließende Zurückklappen der Rückenlehne 2 in die Sitzlage wird die Klinke 43 durch Vermittlung des Zugseils 51 wieder in ihre Schließstellung gezogen, so daß die Tischplatte 28 gegen ein unbeabsichtigtes Auslösen gesichert ist.

## Patentansprüche

1. Kraftfahrzeugsitz mit im wesentlichen waagerecht klappbarer Rückenlehne, **dadurch gekennzeichnet, daß** bei in Klapplage befindlicher Rückenlehne (2) aus deren Rückseite eine Tischplatte (28) in eine erhöhte Position herausfahrbar oder -klappbar ist.

2. Kraftfahrzeugsitz nach Anspruch 1, **dadurch gekennzeichnet, daß** die Tischplatte (28) durch die Rückseite oder einen Teil der Rückseite der Rückenlehne (2) gebildet ist, und in der Rückenlehne (2) die Tischschwingen (31, 32) eines Tisch-Parallelogramms angeordnet sind, die an ihren unteren Enden Drehachsen (33, 34) mit der Rückenlehne (2) und an ihren oberen Enden Drehachsen (35, 36) mit der Tischplatte (28) aufweisen.

3. Kraftfahrzeugsitz nach Anspruch 1 oder Anspruch 2, **dadurch gekennzeichnet, daß** die Tischplatte (28) sowohl bei in Sitzlage und in Klapplage befindlicher Rückenlehne (2) als auch in ihrer Gebrauchslage zwangsverriegelt ist.

4. Kraftfahrzeugsitz nach Anspruch 3, **dadurch gekennzeichnet, daß** eine Handhabe (50) zum Lösen der Verriegelung der Tischplatte (28) vorgesehen ist.

5. Kraftfahrzeugsitz nach Anspruch 4, **dadurch gekennzeichnet, daß** eine weitere, von der Handhabe (50) unabhängige Verriegelung (43, 51) der Tischplatte (28) vorgesehen ist, die sich beim Vorklappen der Rückenlehne (2) selbsttätig löst.

6. Kraftfahrzeugsitz nach einem der vorhergehenden Ansprüche, **dadurch gekennzeichnet, daß** die Tischplatte (28) durch eine Feder (39) in ihre Gebrauchslage vorgespannt ist.

## Claims

1. Motor-vehicle seat with a backrest which can be folded substantially horizontally,
**characterised in that**, when the backrest (2) is in the folded position, a table top (28) can be extended or folded out of its rear side and into an elevated position.

2. Motor-vehicle seat according to Claim 1,
**characterised in that** the table top (28) is formed by the rear side, or part of the rear side, of the backrest (2) and there are disposed, in said backrest (2), the table links of a table parallelogram which have, at their lower ends, axes (33, 34) of rotation with the backrest (2) and, at their upper ends, axes (35, 36) of rotation with the table top (28).

3. Motor-vehicle seat according to Claim 1 or 2,
**characterised in that** the table top (28) is positively locked both when the backrest (2) is in the seating position and folded position and also when said table top is in its position of use.

4. Motor-vehicle seat according to Claim 3,
**characterised in that** a handle (50) is provided for releasing the device for locking the table top (28).

5. Motor-vehicle seat according to Claim 4,
**characterised in that** another device (43, 51) for locking the table top (28) is provided, which is independent of the handle (50) and is released automatically when the backrest (2) is folded forwards.

6. Motor-vehicle seat according to one of the preceding claims,
**characterised in that** the table top (28) is pre-loaded into its position of use by a spring (39).

## Revendications

1. Siège de véhicule automobile dont le dossier est repliable essentiellement horizontalement, **caractérisé en ce que**, en position rabattue du dossier (2), un dessus de table (28) peut être dégagé de la face arrière du dossier (2) et déplié de manière à adopter une position surélevée.

2. Siège de véhicule automobile selon la revendication 1, **caractérisé en ce que** le dessus de table (28) est formé par la face arrière ou par une partie de la face arrière du dossier (2) et **en ce que** dans le dossier (2) sont disposés les éléments de suspension (31, 32) d'un parallélogramme de table, éléments de suspension qui présentent à leurs extrémités inférieures des axes de rotation (33, 34) avec le dossier (2) et à leurs extrémités supérieures des axes de rotation (35, 36) avec le dessus de table (28).

3. Siège de véhicule automobile selon la revendication 1 ou la revendication 2, **caractérisé en ce que** le dessus de table (28) est verrouillé de force non seulement quand le dossier (2) se trouve en position assise et en position rabattue, mais aussi en position d'utilisation.

4. Siège de véhicule automobile selon la revendication 3, **caractérisé en ce qu'**une manette (50) est prévue pour desserrer le dispositif de verrouillage du dessus de table (28).

5. Siège de véhicule automobile selon la revendication 4, **caractérisé en ce qu'**un autre dispositif de verrouillage (43, 51) du dessus de table (28) est prévu, lequel verrouillage est indépendant de la manette (50) et se desserre automatiquement lorsque le dossier (2) est rabattu vers l'avant.

6. Siège de véhicule automobile selon l'une des revendications précédentes, **caractérisé en ce que** le dessus de table (28) est précontraint par un ressort (39) dans sa position d'utilisation.
